# EUROPÄISCHE PATENTSCHRIFT

(11) **EP 3 430 301 B1**
(45) Veröffentlichungstag und Bekanntmachung des Hinweises auf die Patenterteilung: **06.05.2020**
(21) Anmeldenummer: 17710937.8
(22) Anmeldetag: 15.03.2017
(51) Int. Cl.: F16L 33/02

(54) **SCHLAUCHSCHELLE**
HOSE CLAMP
COLLIER DE SERRAGE

(30) Priorität: 16.03.2016 DE 102016104834
(43) Veröffentlichungstag der Anmeldung: 23.01.2019
(73) Patentinhaber: NORMA Germany GmbH, 63477 Maintal (DE)
(72) Erfinder: BENNAI, Yassine, 91270 Vigneux Sur Seine (FR); HENRICH, Detlef, 63694 Limeshain (DE); KRÜGER, Manfred, 63654 Büdingen (DE)
(74) Vertreter: Patentanwälte Olbricht Buchhold Keulertz
(86) Internationale Anmeldenummer: PCT/EP2017/056181
(87) Internationale Veröffentlichungsnummer: WO 2017/158065

(56) Entgegenhaltungen:
- EP-A1- 2 163 801
- EP-A1- 2 578 918
- WO-A1-2009/109484
- DE-A1-102012 204 370
- KR-A- 20100 120 366
- US-A- 3 407 449

## Beschreibung

Die vorliegende Erfindung betrifft eine Schlauchschelle mit einem sich entlang einer Umfangsrichtung erstreckenden Schellenband und mit einer Spanneinrichtung zum Spannen des Schellenbandes, wobei wenigstens ein Clipelement am Schellenband angeordnet ist, mit dem die Schlauchschelle an einem Schlauch in einem axial bestimmten Abstand zu einem Schlauchende fixierbar ist.

### STAND DER TECHNIK

Die DE 10 2006 057 497 A1 offenbart eine Schlauchschelle der hier interessierenden Art bei der ein Clipelement am Schellenband angeordnet ist, welches zum Fixieren der unverspannten Schlauchschelle am Schlauchende dient. Das Clipelement wird mit einer Fixiereinrichtung beispielsweise im oder am Schlauchende verpresst oder vercrimpt, sodass das Clipelement weitestgehend unlösbar am Schlauchende positioniert ist. Das Clipelement hält dabei das Schellenband der Schlauchschelle formschlüssig fest, wobei zur Verbindung des Clipelementes mit dem Schellenband ein Einklemmen, ein Vernieten oder ein sonstiges lösbares Verpressen vorgeschlagen wird. Beim Anziehen der Spanneinrichtung zum Spannen der Schlauchschelle am Schlauchende soll sich das Schellenband aus der Verbindung mit dem Clipelement lösen, sodass sich das Schellenband vollständig an die Oberfläche des Schlauches anlegen kann. Anschließend verbleibt das Clipelement funktionslos am Schlauch.

Beim Spannen der Schlauchschelle am Schlauchende wird ein Teil des Schellenbandes in die Spanneinrichtung eingezogen. Befinden sich beispielsweise mehrere Clipelemente zur Vorfixierung der Schlauchschelle am Schlauch in unterschiedlichen Positionen am Schellenband, so können die Clipelemente, die zuvor am Schlauchende verpresst oder vercrimpt wurden, verspannen. Die Verspannung hat ihre Ursache in der Einziehbewegung des Schellenbandes in die Spanneinrichtung. Die Folge ist eine Verdrehung und Dejustierung der Schlauchschelle am Schlauch. Beim Spannen verringert sich der Durchmesser der Schlauchschelle und das Schellenband wird in Umfangsrichtung des Schlauches verlagert, sodass eine Verkippung oder Verklemmung der Clipelemente die Folge ist. Die Dejustierung der Schlauchschelle am Schlauch kann schließlich zu einer fehlerhaften Montage der Schlauchschelle führen und die Schlauchschelle kann eine in der Regel gewünschte Halte- und Dichtfunktion nicht richtig erfüllen.

Eine weitere Schlauchschelle mit einem Clipelement, das am Schellenband angeordnet ist, ist in der EP 2 578 918 A1 offenbart.

### OFFENBARUNG DER ERFINDUNG

Aufgabe der Erfindung ist die Bereitstellung einer Schlauchschelle, die wenigstens ein Clipelement aufweist, mit der die Schlauchschelle an einem Schlauchende eines Schlauches fixierbar ist und mit der eine Fehlmontage der Schlauchschelle vermieden werden soll. Insbesondere soll die Ausgestaltung des Clipelementes verbessert werden, um die Fehlmontage zu verhindern.

Diese Aufgabe wird ausgehend von einer Schlauchschelle gemäß dem Oberbegriff des Anspruches 1 mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Clipelement auf dem Schellenband in Umfangsrichtung beweglich aufgenommen ist.

Der Kern der Erfindung liegt dabei in einer speziellen Verbindungsform des Clipelementes mit dem Schellenband. Die Verbindungsform ist so ausgeführt, dass die Schlauchschelle durch Betätigung der Spanneinrichtung am Schlauch befestigt werden kann, ohne dass es zu einer Fehlstellung der Clipelemente kommt. Wird die Spanneinrichtung betätigt und das Schellenband in die Spanneinrichtung eingezogen, so kann das Schellenband durch das Clipelement hindurchgezogen werden, ohne dass das Clipelement durch eine Verlagerung des Schellenbandes in seiner Umfangsrichtung eine Schrägstellung oder eine sonstige Dejustierung erfährt. Das Schellenband und das Clipelement sind also axial und gegebenenfalls radial zueinander fixiert, in Umfangsrichtung aber relativ zueinander beweglich. Als Folge ergibt sich eine sichere Montage der mit wenigstens einem Clipelement am Schlauchende vorfixierten Schlauchschelle und es kann nicht zu einer Fehlstellung der am Schlauchende festgezogenen Schlauchschelle kommen. Falls der Montagedurchmesser der Schlauchschelle relativ groß im Verhältnis zum Durchmesser im gespannten Zustand werden muss, um am Schlauchende angeordnet werden zu können, muss ein längerer Abschnitt des Schellenbandes in die Spanneinrichtung eingezogen werden. Insbesondere für derartige Anwendungen bietet die erfindungsgemäße Verbindung zwischen dem Clipelement und dem Schellenband besondere Vorteile.

Das Clipelement ist am Schellenband so aufgenommen, dass das Clipelement mit einer bestimmten Bewegungskraft entlang der Umfangsrichtung am Schellenband verschiebbar ist. Dadurch wird erreicht, dass die Clipelemente am Schellenband an vorgegebenen Stellen reibschlüssig vorfixiert werden können, ohne dass das Clipelement bei einem Festziehen der Schlauchschelle mit der Verlagerung des Schellenbandes in Umfangsrichtung mit verlagert wird. Allerdings wird erreicht, dass das Clipelement an seiner vorfixierten Position am Schellenband verbleibt, sodass auch eine Fehlmontage aufgrund eines losen sich verlagernden Clipelementes vermieden wird. Die Verbindung kann so eingestellt werden, dass sich eine Bewegungskraft ergibt, die ein Selbsthalten des Clipelements an der vorgegebenen Position des Schellenbandes ermöglicht. Wird die Schlauchschelle jedoch festgezogen, kann das Schellenband in Umfangsrichtung durch das Clipelement hindurchgezogen werden.

Beispielsweise ist das Clipelement so am Schellenband aufgenommen, dass das Clipelement das Schellenband wenigstens abschnittsweise formschließend umgreift. Der Formschluss ist dabei nicht in Umfangsrichtung des Schellenbandes ausgeführt, sodass das Schellenband mit einem verbleibenden Freiheitsgrad durch das Clipelement hindurchgezogen werden kann. Der Formschluss durch das Clipelement wird dabei so gebildet, dass das Clipelement das Schellenband wenigstens teilweise umgreift. Ist das Clipelement am Schellenband entsprechend angeordnet und die Schlauchschelle am Schlauch vorfixiert, so kann das Clipelement durch die vorgesehene Formschlussgeometrie nicht vom Schellenband gelöst werden, ohne nicht zuvor die Schlauchschelle festzuziehen.

Erfindungsgemäß weist das Clipelement einen U-förmigen Umgriff mit einem Außenschenkel und mit einem Innenschenkel auf, wobei zwischen den Schenkeln das Schellenband hindurchgeführt ist. Beim Festziehen der Schlauchschelle am Schlauch ist der Innenschenkel zwischen dem Schellenband und der Oberfläche des Schlauches eingeklemmt, sodass das Clipelement nach dem Festziehen der Schlauchschelle an der Anordnung verbleibt, ohne eine weitere Funktion zu erfüllen. Zwischen dem Außenschenkel und dem Innenschenkel, welche Schenkel nicht zwingend parallel zueinander verlaufen müssen und unter einem Winkel zueinander ausgerichtet sein können, verläuft das Schellenband. Am Innenschenkel oder am Außenschenkel schließt sich eine Fixieranformung des Clipelementes an. Die Fixieranformung dient zur Fixierung des Clipelementes am Schlauchende, beispielsweise durch ein Verpressen oder ein Vercrimpen.

Zum sicheren Anordnen des Clipelements am Schellenband werden am Innenschenkel und/oder am Außenschenkel Haltelaschen vorgesehen, die um das Schellenband umgebogen werden können. Dabei sind an dem den Haltelaschen gegenüberliegenden Innen- oder Außenschenkel seitliche Flügel vorzusehen, um die die Haltelaschen gebogen werden. Dadurch wird das Clipelement um das Schellenband herum geschlossen, wobei ein Kontakt zwischen Haltelaschen und Schellenband vermieden wird. Ein Verklemmen des Clipelements durch zu starkes Andrücken der Haltelaschen an das Schellenband wird so verhindert.

Alternativ und nicht im Rahmen der Erfindung weist das Clipelement eine C-Form mit einem außen am Schellenband verlaufenden Grundschenkel auf, wobei an den Endseiten des Grundschenkels Umgriffe zur Bildung der C-Form ausgebildet sind und wobei sich an einem Umgriff eine Fixieranformung zur Fixierung des Clipelementes am Schlauchende anschließt. Die Variante des Clipelementes mit einer C-Form hat den Vorteil, dass bei einem Festziehen der Schlauchschelle am Schlauch das Schellenband aus dem Clipelement gelöst werden kann, wobei sich kein weiterer Schenkel zwischen dem Schellenband und der Oberfläche des Schlauches befindet, wenn die Schlauchschelle am Schlauch festgezogen ist. Soll dabei das Schellenband in Umfangsrichtung durch die C-förmige Formschlussgeometrie des Clipelementes hindurch beweglich bleiben, so ist die Verliersicherheit des Clipelementes allerdings nicht so hoch wie bei einem U-förmigen, beidseitigen Umgriff des Schellenbandes durch das Clipelement.

Mit weiterem Vorteil der C-förmigen Ausgestaltung ist an einer freien Endseite der Umgriff mittels eines umgebogenen Endes des Grundschenkels gebildet, wobei es vorgesehen ist, dass der Umgriff an der Endseite, an die sich die Fixieranformung anschließt, mittels einer aus dem Grundschenkel ausgeklinkten Lasche gebildet ist. Wird das Clipelement am Schellenband angeordnet, so umgreift das umgebogene Ende des Grundschenkels eine erste Randseite des Schellenbandes, und eine gegenüberliegende Randseite des Schellenbandes wird durch die ausgeklinkte Lasche umgriffen.

Mit Vorteil der C-förmigen Ausgestalung ist das Clipelement vom Schellenband lösbar, wenn das Schellenband am Schlauch befestigt und mit der Spanneinrichtung verspannt ist. Alternativ kann das Clipelement am Schellenband verbleiben, wenn die Schlauchschelle am Schlauch verspannt ist, wodurch die Funktion der Schlauchschelle zur Befestigung des Schlauches beispielsweise an einem Stutzen oder dergleichen nicht beeinträchtigt ist.

### BEVORZUGTES AUSFÜHRUNGSBEISPIEL DER ERFINDUNG

Weitere, die Erfindung verbessernde Maßnahmen werden nachstehend anhand der Figuren näher dargestellt. Es zeigt:
- Figur 1: ein Ausführungsbeispiel eines Clipelementes für eine Schlauchschelle mit einem U-förmigen Umgriff,
- Figur 2a bis 2c: Weiterbildungen des Clipelementes zur Anordnung an einem Schellenband gemäß Figur 1 in Seitenansicht,
- Figur 3: ein Ausführungsbeispiel eines Clipelementes für eine Schlauchschelle mit einer C-förmigen Ausführung,
- Figur 4: eine Seitenansicht des Clipelementes gemäß Figur 3,
- Figur 5: eine weitere Variante des Clipelementes gemäß Figur 3 mit einem Umgriff zur Einfassung des Schellenbandes, welcher Umgriff durch eine ausgeklinkte Lasche im Grundschenkel gebildet ist,
- Figur 6: eine Draufsicht auf den Grundschenkel des Clipelementes, das gemäß der C-Form ausgeführt ist,
- Figur 7: eine Draufsicht auf ein Schlauchende eines Schlauches mit einer Schlauchschelle umfassend ein Clipelement und
- Figur 8: eine Seitenansicht des Schlauches mit der Schlauchschelle gemäß Figur 7.

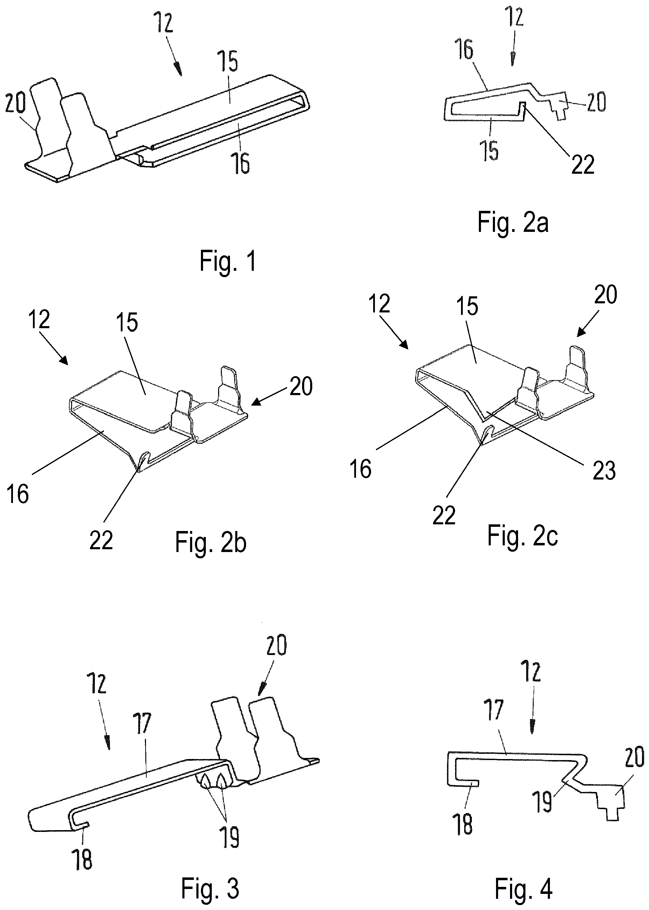

Figur 1 zeigt ein Ausführungsbeispiel eines Clipelementes 12 zur Anordnung an einem Schellenband einer Schlauchschelle. Das Clipelement 12 ist als Stanz-Biege-Bauteil ausgeführt und weist beispielsweise ein Federstahlmaterial auf. Das Clipelement 12 weist einen Innenschenkel 15 und einen Außenschenkel 16 auf. Zwischen den Schenkeln 15 und 16 kann das Schellenband 10 hindurchgeführt werden. Die Schenkel 15 und 16 umschließen dabei das Schellenband 10 im Wesentlichen vollständig, sodass das Clipelement 12 bis auf einen Freiheitsgrad in einer Umfangsrichtung des Schellenbandes formschließend am Schellenband angeordnet werden kann. An einer Seite des Innenschenkels 15 schließt sich eine Fixieranformung 20 an. Mit der Fixieranformung 20 kann die Schlauchschelle an einem Schlauchende eines Schlauches zur Montagevorbereitung befestigt werden, beispielsweise durch Verpressen oder Vercrimpen.

Die Fixieranformung 20 weist zwei nach innen gebogenene Haltestege auf, die gegebenenfalls in die Außenseite eines Schlauches eindringen können. Die Haltestege können so einen sicheren Halt des Clipelements 12 und damit der Schlauchschelle am Schlauchende bereits vor Spannen der Schlauchschelle bewirken. Das Clipelement ermöglicht also eine sichere Vorpositionierung.

Figur 2a zeigt eine Seitenansicht eines abgewandelten Clipelementes 12 mit dem Innenschenkel 15 und dem Außenschenkel 16, bei der sich die Fixieranformung an den Außenschenkel 16 anschließt. Wird das Clipelement 12 am Schellenband befestigt, so befindet sich der Innenschenkel 15 zwischen dem Schellenband und der Außenseite des Schlauches. Wird die Fixieranformung 20 am Schlauchende befestigt, so biegt sich der Außenschenkel 16 derart zu, dass das Schellenband zwischen den Schenkeln 15, 16 beispielsweise leicht geklemmt wird. Die leichte Klemmung erlaubt dabei unter Aufbringung einer sehr geringen Zugkraft das Hindurchgleiten des Schellenbandes durch den Spalt zwischen dem Innenschenkel 15 und dem Außenschenkel 16. Wird das Schellenband in die Spanneinrichtung der Schlauchschelle eingezogen, kann das Clipelement 12 dadurch die gewünschte Position am Schlauchende behalten, ohne beispielsweise mit dem Schellenband mitgezogen zu werden. Eine Dejustierung des Clipelementes 12 wird damit vermieden.

In Figur 2b ist das Clipelement 12 in räumlicher Darstellung gezeigt. An einem freien Ende des Außenschenkels 16 sind Haltenasen 22 ausgebildet, mit denen die Schenkel 15, 16 des Clipelements 12 geschlossen werden Können. Durch entsprechendes Umbiegen der Haltenasen 22 werden diese um das Schellenband herum gelegt und das Clipelement 12 somit formschlüssig am Schellenband gehalten. Die Haltenasen 22 befinden sich dabei in Umfangsrichtung an den äußeren Ecken des Außenschenkels 16 und können so in Umfangsrichtung gesehen neben dem Innenschenkel 15 in direkte Anlage mit dem Schellenband gelangen.

Figur 2c zeigt nun eine erfindungsgemäße Weiterbildung, in der der Innenschenkel seitliche Flügel 23 aufweist, die durch eine Verbreiterung des Innenschenkels 15 in Umfangsrichtung gebildet werden. Nach dem Schließen des Clipelements 12 um das Schellenband können die Haltenasen 22 dann derart umgebogen werden, dass sie in Anlage mit den Flügeln 23 gelangen. Auch so wird eine formschlüssige Verbindung erhalten, wobei im Unterschied zur Ausgestaltung nach Figur 2b jedoch kein direkter Kontakt der Haltenasen 22 mit dem Schellenband erfolgt.

Figur 3 zeigt ein alternatives, nicht erfindungsgemäßes Ausführungsbeispiel eines Clipelementes 12 mit einem Grundschenkel 17. An einer ersten Endseite weist der Grundschenkel 17 einen Umgriff 18 auf, der durch einen U-förmig umgebogenen Bereich gebildet ist. Ein weiterer Umgriff 19 an einem gegenüberliegenden Endbereich des Grundschenkels 17 ist durch Ausbuchtungen aus dem Grundschenkel 17 gebildet, wobei sich die Fixieranformung 20 an den Umgriff 19 und damit an den Bereich der Ausbuchtungen anschließt.

Anstelle der dargestellten zwei Ausbuchtungen kann auch nur eine einzige Ausbuchtung vorgesehen werden, die sich dabei insbesondere über die gesamte Breite des Clipelements 12 erstrecken kann.

Figur 4 zeigt eine Seitenansicht des Clipelementes 12 gemäß dem Ausführungsbeispiel in Figur 3. Der Grundschenkel 17 befindet sich bei Anordnung des Clipelementes 12 am Schellenband außenseitig des Schellenbandes und nicht zwischen dem Schellenband und der Oberfläche des Schlauches. Die Seitenansicht zeigt den Umgriff 18 zur formschließenden Einfassung eines Randbereiches des Schellenbandes. Weiterhin ermöglicht auch der Umgriff 19 eine formschließende Einfassung des Schellenbandes gegenüberliegend zum Umgriff 18. An den Umgriff 19 schließt sich die Fixieranformung 20 an.

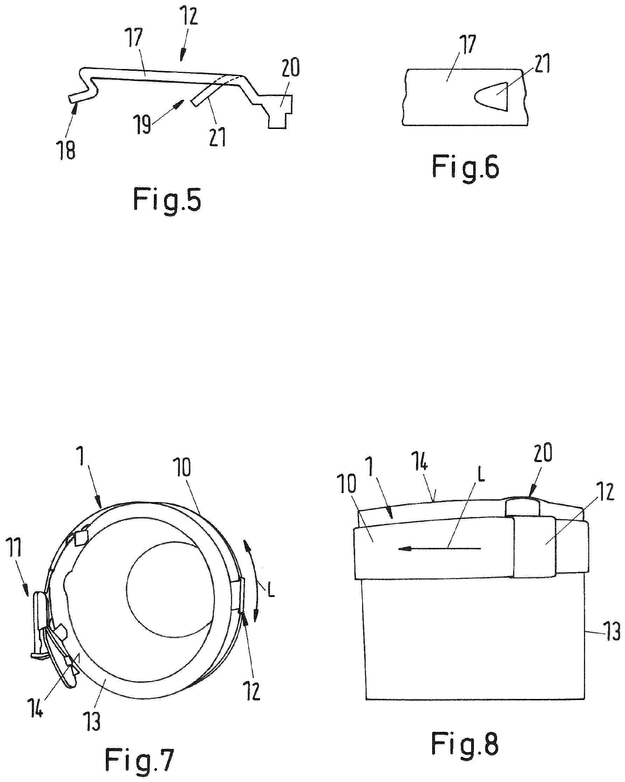

Figur 5 zeigt ein weiteres Ausführungsbeispiel eines Clipelementes 12 gemäß der Variante nach Figur 3 und Figur 4, wobei in Abwandlung zur Ausgestaltung des Umgriffes 19 eine Lasche 21 vorgesehen ist, die aus dem Grundschenkel 17 ausgeklinkt oder eingeschnitten ist. Die Lasche 21 ragt dabei aus der Ebene des Grundschenkels 17 hervor und bildet einen Umgriff zur haltenden Anordnung des Schellenbandes, sodass die Lasche 21 mit dem gegenüberliegenden endseitigen Umgriff 18 zur Aufnahme des Schellenbandes eine formschließende Geometrie bildet. An den Ausklinkbereich zur Bildung der Lasche 21 schließt sich die Fixieranformung 20 an. Figur 6 zeigt dabei eine Draufsicht auf den Grundschenkel 17 mit der ausgeklinkten Lasche 21.

Die Figuren 7 und 8 zeigen eine Anordnung einer Schlauchschelle 1 an einem Schlauch 13. Der Schlauch 13 ist im Bereich des Schlauchendes 14 gezeigt, wobei die Schlauchschelle 1 in Figur 7 in einer Draufsicht und in Figur 8 in einer Seitenansicht dargestellt ist.

Gegenüberliegend zu einer Spanneinrichtung 11 der Schlauchschelle 1 befindet sich ein Clipelement 12, das am Schellenband 10 aufgenommen ist. Das Schellenband 10 ist in dargestellter Umfangsrichtung L durch das Clipelement 12 hindurchführbar. Dabei ist das Clipelement 12 mit der Fixieranformung 20 am Schlauchende 14 verpresst oder vercrimpt. Es kann aber bei einer Betätigung der Spanneinrichtung 11 das Schellenband 10 durch das Clipelement 12 hindurchwandern. Im Ergebnis ergibt sich der Vorteil, dass das Clipelement 12 in der gezeigten Position verbleibt, während die Schlauchschelle 1 am Schlauch 13 gespannt wird. Beispielsweise befindet sich das Clipelement 12 gegenüberliegend zur Spanneinrichtung 11. Wird die Spanneinrichtung 11 bedient, wandert ein Endbereich des Schellenbandes 10 in das Spanneinrichtung 11 hinein. Dabei legt sich das Schellenband 10 schließlich vollständig an die Außenseite des Schlauches 13 an, wobei das Schellenband 10 das Clipelement 12 durchwandert, ohne dass dessen Position am Schlauch 13 beziehungsweise am Schlauchende 14 verändert wird.

### Bezugszeichenliste

- 1: Schlauchschelle
- 10: Schellenband
- 11: Spanneinrichtung
- 12: Clipelement
- 13: Schlauch
- 14: Schlauchende
- 15: Innenschenkel
- 16: Außenschenkel
- 17: Grundschenkel
- 18: Umgriff
- 19: Umgriff
- 20: Fixieranformung
- 21: Lasche
- 22: Haltenase
- 23: Flügel

- L: Umfangsrichtung

## Patentansprüche

1. Schlauchschelle (1) mit einem sich entlang einer Umfangsrichtung (L) erstreckenden Schellenband (10) und mit einer Spanneinrichtung (11) zum Spannen des Schellenbandes (10), wobei wenigstens ein Clipelement (12) am Schellenband (10) angeordnet ist, mit dem die Schlauchschelle (1) an einem Schlauch (13) in einem axial bestimmten Abstand zu einem Schlauchende (14) fixierbar ist, wobei das Clipelement (12) auf dem Schellenband (10) in Umfangsrichtung (L) beweglich aufgenommen ist, wobei das Clipelement (12) einen U-förmigen Umgriff mit einem Innenschenkel (15) und mit einem Außenschenkel (16) aufweist, wobei zwischen den Schenkeln (15, 16) das Schellenband (10) hindurchgeführt ist, wobei der Innenschenkel (15) beim Festziehen der Schlauchschelle (1) am Schlauch (13) zwischen dem Schellenband (1) und der Oberfläche des Schlauches (13) eingeklemmt ist, wobei am Innenschenkel (15) und/oder am Außenschenkel (16) Haltelaschen (22) vorgesehen sind, **dadurch gekennzeichnet, dass** an dem den Haltelaschen (22) gegenüberliegenden Innen- oder Außenschenkel seitliche Flügel (23) vorgesehen sind, die durch eine Verbreiterung des Innenschenkels (15) in Umfangsrichtung gebildet sind, wobei die Haltelaschen (22) um das Schellenband (10) und um die seitlichen Flügel (23) biegbar sind.

2. Schlauchschelle (1) nach Anspruch 1, **dadurch gekennzeichnet, dass** das Clipelement (12) so am Schellenband (10) aufgenommen ist, dass das Clipelement (12) mit einer bestimmten Bewegungskraft entlang der Umfangsrichtung (L) verschiebbar ist.

3. Schlauchschelle (1) nach Anspruch 1 oder 2, **dadurch gekennzeichnet, dass** das Clipelement (12) so am Schellenband (10) aufgenommen ist, dass das Clipelement (12) das Schellenband (10) wenigstens abschnittsweise formschließend umgreift.

4. Schlauchschelle (1) nach Anspruch 3, **dadurch gekennzeichnet, dass** das Schellenband (10) in Umfangsrichtung (L) durch die Formschlussgeometrie durchrutschbar ist.

## Claims

1. Hose clamp (1) having a clamp band (10) extending along a peripheral direction (L) and having a tensioning device (11) for tensioning the clamp band (10), wherein at least one clip element (12) is disposed on the clamp band (10), with which clip element the hose clamp (1) can be fixed on a hose (13) at an axially specified distance from a hose end (14), wherein the clip element (12) is movably accommodated on the clamp band (10) in peripheral direction (L), wherein the clip element (12) has a U-shaped wrap-around having an inner leg (15) and having an outer leg (16), wherein the clamp band (10) is guided through between the legs (15, 16), wherein, when the hose clamp (1) is pulled tight, the inner leg (15) is clamped at the hose (13) between the clamp band (1) and the surface of the hose (13), wherein at the inner leg (15) and/or at the outer leg (16) are provided holding tabs (22), **characterised in that** on the inner- or outer leg situated opposite the holding tabs (22) are provided lateral wings (23) which are formed by a widening of the inner leg (15) in peripheral direction, wherein the holding tabs (22) can be bent around the clamp band (10) and about the lateral wings (23).

2. Hose clamp (1) according to claim 1, **characterised in that** the clip element (12) is accommodated on the clamp band (10) such that the clip element (12) can be slid with a specific moving force along the peripheral direction (L).

3. Hose clamp (1) according to claim 1 or 2, **characterised in that** the clip element (12) is accommodated on the clamp band (10) such that the clip element (12) wraps around the clamp band (10) at least sectionally in a form-fitting manner.

4. Hose clamp (1) according to claim 3, **characterised in that** the clamp band (10) can be slid through in peripheral direction (L) by means of the form-fitting geometry.

## Revendications

1. Collier de serrage (1) avec une bande de collier (10) s'étendant le long d'une direction circonférentielle (L) et avec un dispositif de serrage (11) pour le serrage de la bande de collier (10), dans lequel au moins un élément de clipsage (12) est agencé au niveau de la bande de collier (10), avec lequel le collier de serrage (1) peut être fixé au niveau d'un tuyau (13) à une distance déterminée axialement par rapport à une extrémité de tuyau (14), dans lequel l'élément de clipsage (12) est reçu mobile sur la bande de collier (10) dans la direction circonférentielle (L), dans lequel l'élément de clipsage (12) présente un élément de serrage en forme de U avec une branche intérieure (15) et avec une branche extérieure (16), dans lequel la bande de collier (10) est guidée entre les branches (15, 16), dans lequel la branche intérieure (15) est coincée lors du serrage du collier de serrage (1) au niveau du tuyau (13) entre la bande de collier (1) et la surface du tuyau (13), dans lequel des brides de retenue (22) sont prévues au niveau de la branche intérieure (15) et/ou au niveau de la branche extérieure (16), **caractérisé en ce que** des ailes latérales (23), qui sont formées par un élargissement de la branche intérieure (15) dans la direction circonférentielle, sont prévues au niveau de la branche intérieure ou extérieure opposée aux brides de retenue (22), dans lequel les brides de retenue (22) sont flexibles autour de la bande de collier (10) et autour des ailes latérales (23).

2. Collier de serrage (1) selon la revendication 1, **caractérisé en ce que** l'élément de clipsage (12) est reçu au niveau de la bande de collier (10) de sorte que l'élément de clipsage (12) peut être déplacé avec une force de déplacement déterminée le long de la direction circonférentielle (L).

3. Collier de serrage (1) selon la revendication 1 ou 2, **caractérisé en ce que** l'élément de clipsage (12) est reçu au niveau de la bande de collier (10) de sorte que l'élément de clipsage (12) enserre par complémentarité de forme au moins par section la bande de collier (10).

4. Collier de serrage (1) selon la revendication 3, **caractérisé en ce que** la bande de collier (10) peut glisser dans la direction circonférentielle (L) par la géométrie de complémentarité de forme.
